# EUROPEAN PATENT APPLICATION

(11) **EP 4 813 346 A1**
(43) Date of publication of application: **30.09.2026**
(21) Application number: 25165628.6
(22) Date of filing: 24.03.2025
(51) Int. Cl.: A61C 9/00

(54) **INTRAORAL SCANNING SYSTEM**

(71) Applicant: 3Shape A/S, 1060 Copenhagen K (DK)
(72) Inventor: SCHACK, Signe Friis, 1060 Copenhagen K (DK); LEGHAMMAR, Stina, 1060 Copenhagen K (DK); REYNOLDS, Dylan, 1060 Copenhagen K (DK); NIELSEN, Mikael, 1060 Copenhagen K (DK)
(74) Representative: Zacco Denmark A/S

(57) **Abstract**

An intraoral scanning system (102) includes an intraoral scanner (104) configured for obtaining images of a dental object. The intraoral scanner (104) includes a projector unit (112) for illuminating the dental object, a camera unit (114) configured for acquiring images of the dental object, a scanner housing (116) - the projector unit (112) and the camera unit (114) are arranged inside the scanner housing (116), and a button interface (118) arranged on the scanner housing (112). The button interface (118) includes a first button (120) having a contact surface with a first tactile characteristic and a second button (122) having a contact surface with a second tactile characteristic. The first button (120) is activated when a first activation weight is applied on the contact surface of the first button (120) and the second button (122) is activated when a second activation weight is applied on the contact surface of the second button (122). The first tactile characteristic is different from the second tactile characteristic, and/or the first activation weight is different than the second activation weight.

## Description

### BACKGROUND

### Technical Field

The present disclosure relates, generally, to intraoral scanning systems, and, more particularly, to an intraoral scanner having a button interface that enhances user-experience during scanning of an oral cavity of a patient.

### Description of the Prior Art

Intraoral scanners are handheld devices that are generally used in dentistry to scan and capture digital images of an oral cavity of a human mouth. The images may be generated on a computing device to create digital impression data of the oral cavity. Such handheld devices include an input interface for running various functions, such as activating the device and/or feeding instructions into the computing device. Users, such as dentists, medical practitioners, etc., find it cumbersome to use the input interfaces in situations when they desire to view the oral cavity, e.g., by way of the digital images, without visual interruptions and/or when such interfaces are used to select any object on the computing device.

### SUMMARY

It is an object of the present disclosure to provide an input interface, e.g., a button interface, for an intraoral scanner that addresses one or more disadvantages of the prior art. As an example, the intraoral scanner includes buttons that are distinguishable from each other, e.g., by their tactile characteristics.

To this end, an intraoral scanning system is described. The intraoral scanning system includes an intraoral scanner for obtaining images of a dental object. The intraoral scanner includes a projector unit for illuminating the dental object, a camera unit for acquiring images of the dental object, a scanner housing to house the projector unit and the camera unit, and a button interface arranged on the scanner housing. The button interface includes a first button and a second button. The first button has a contact surface with a first tactile characteristic. The first button is activated when a first activation weight is applied on the contact surface of the first button. The second button has a contact surface with a second tactile characteristic. The second button is activated when a second activation weight is applied on the contact surface of the second button.

In the present context, the term tactile characteristics is used to describe the features of a surface which are perceivable by touch, e.g. contour, shape, surface roughness, etc. In the present context, the term contact surface is used to describe the surface of the buttons configured to be handles by the user, i.e. by touching the contact surface, e.g. with their fingers. The contact surfaces are therefore the outward facing, exposed surfaces of the buttons, e.g. the first and second buttons, configured for activation by contact with the user.

In some additional, alternative, or selectively cumulative embodiments, the first tactile characteristic is different from the second tactile characteristic, and/or, the first activation weight is different from the second activation weight. The differing tactile characteristics and the differing activation weights allow a user of the intraoral scanner to distinguish the buttons from each other by way of their sense of touch.

In some additional, alternative, or selectively cumulative embodiments, the first activation weight is between 170 grams (g) and 270 g, preferably between 185 g and 255 g, more preferably between 200 g and 240 g.

In some additional, alternative, or selectively cumulative embodiments, the second activation weight is between 120 g and 220 g, preferably between 135 g and 205 g, more preferably between 150 g and 190 g.

In some additional, alternative, or selectively cumulative embodiments, the first activation weight is at least 10% heavier, preferably 20% heavier, more preferably 25% heavier, than the second activation weight.

In some additional, alternative, or selectively cumulative embodiments, the contact surface of the first button has a first outer contour and the contact surface of the second button has a second outer contour. In some embodiments, the first outer contour is different from the second outer contour. This allows the buttons to be distinguishable from each other by way of their sense of touch.

In some additional, alternative, or selectively cumulative embodiments, one of the first and second contours is substantially convex and the other of the first and second contours is substantially concave.

In some additional, alternative, or selectively cumulative embodiments, the first contour is substantially concave and the second contour is substantially convex.

In some additional, alternative, or selectively cumulative embodiments, the first contour includes a depression and the second contour includes a dimple. This allows the buttons to be distinguishable from each other by way of their sense of touch.

In some additional, alternative, or selectively cumulative embodiments, the first contour includes a circumferential rim around the depression.

In some additional, alternative, or selectively cumulative embodiments, the contact surface of the first button has a first outer area and the contact surface of the second button has a second outer area. The first outer area is different from the second outer area. This allows the buttons (i.e., the first button and the second button) to be distinguishable from each other by way of their sense of touch.

In some additional, alternative, or selectively cumulative embodiments, one of the first and second outer areas is between 20% and 60% larger, preferably between 30% and 50% larger, more preferably between 35% and 45% larger, than the other of the first and second outer areas.

In some additional, alternative, or selectively cumulative embodiments, the first outer area is larger than the second outer area.

In some additional, alternative, or selectively cumulative embodiments, the first outer area is between 200 and 300 (millimeter) mm², preferably between 220 and 280 mm², more preferably between 240 and 260 mm².

In some additional, alternative, or selectively cumulative embodiments, the second outer area is between 125 and 225 mm², preferably between 145 and 205 mm², more preferably between 165 and 185 mm².

In some additional, alternative, or selectively cumulative embodiments, the contact surface of the first button has a first activation area and the contact surface of the second button has a second activation area, and the first activation area is different from the second activation area. This allows the buttons to be distinguishable from each other by way of their sense of touch.

In some additional, alternative, or selectively cumulative embodiments, one of the first and second activation areas is between 2 and 10 times larger, preferably between 4 and 8 times larger, more preferably between 5 and 7 times larger, than the other of the first and second activation areas.

In some additional, alternative, or selectively cumulative embodiments, the first activation area is larger than the second activation area.

In some additional, alternative, or selectively cumulative embodiments, the contact surface of the first button has a first shape and the contact surface of the second button has a second shape. The first shape is different from the second shape. This allows the buttons to be distinguishable from each other by way of their sense of touch.

In some additional, alternative, or selectively cumulative embodiments, one or both of the first shape and the second shape is/are substantially circular.

In some additional, alternative, or selectively cumulative embodiments, the first outer shape has a radius between 5 mm and 13 mm, preferably between 6 mm and 12 mm, more preferably between 7 mm and 11 mm.

In some additional, alternative, or selectively cumulative embodiments, the second outer shape has a radius between 5.5 mm and 11.5 mm, preferably between 6.5 mm and 10.5 mm, more preferably between 5.5 mm and 9.5 mm.

In some additional, alternative, or selectively cumulative embodiments, the center of the first button has a first height above or below an outer surface of the scanner housing and the center of the second button has a second height above or below the outer surface of the scanner housing. The first height is different from the second height. This allows the buttons to be distinguishable from each other by way of their sense of touch.

In some additional, alternative, or selectively cumulative embodiments, the contact surface of the first button has a first surface roughness and the contact surface of the second button has a second surface roughness. The first surface roughness is different from the second surface roughness. This allows the buttons to be distinguishable from each other by way of their sense of touch.

In some additional, alternative, or selectively cumulative embodiments, the center of the first button and the center of the second button is between 12 mm and 24 mm, preferably between 14 mm and 22 mm, more preferably between 16 mm and 20 mm, from each other.

In some additional, alternative, or selectively cumulative embodiments, the contact surface of the first button has a first type of visual marker and the contact surface of the second button has a second type of visual marker. The first type of visual marker is different from the second type of visual marker.

In some additional, alternative, or selectively cumulative embodiments, one of the first and second visual markers is arranged centrally on its respective contact surface and the other of the first and second visual markers is arranged around the periphery of its respective contact surface.

In some additional, alternative, or selectively cumulative embodiments, at least one of the contact surface of the first button and the contact surface of the second button is/are provided by a single flexible overlay. The single flexible overlay allows the button interface to remain clean and hygienic. Moreover, the single flexible overlay protects internal components of the intraoral scanner from dust and water.

In some additional, alternative, or selectively cumulative embodiments, the single flexible overlay is made from an elastomer, such as silicone rubber.

In some additional, alternative, or selectively cumulative embodiments, the single flexible overlay is arranged in one or more depression(s) on the outer surface of the scanner housing.

In some additional, alternative, or selectively cumulative embodiments, both of the contact surface of the first button and the contact surface of the second button are provided by the single flexible overlay.

In some additional, alternative, or selectively cumulative embodiments, the single flexible overlay is made in one piece and provides or defines both of the contact surface of the first button and the contact surface of the second button.

In some additional, alternative, or selectively cumulative embodiments, the flexible overlay includes a separation zone between the contact surface of the first button and the contact surface of the second button. The separation zone may include a width which is narrower than the width of the contact surfaces of the first and second buttons. This allows the buttons to be distinguishable from each other by way of their sense of touch.

In some additional, alternative, or selectively cumulative embodiments, one or both of the first button and the second button is a push button.

In some additional, alternative, or selectively cumulative embodiments, one or both of the first button and the second button is a touch button.

In some additional, alternative, or selectively cumulative embodiments, the touch button(s) providing one or both of the first button and the second button is/are provided by one or more touch sensitive area(s) of the outer surface of the scanner housing.

In some additional, alternative, or selectively cumulative embodiments, one of the first and second buttons is provided by a push button and the other of the first and second buttons is provided by a touch button. This allows the buttons to be distinguishable from each other by way of their sense of touch.

In some additional, alternative, or selectively cumulative embodiments, the intraoral scanner further comprises an inertial measurement unit (IMU) for detecting movement of the intraoral scanner and for generating movement data based on the detected movement.

In some additional, alternative, or selectively cumulative embodiments, the intraoral scanning system includes an external computing device and a display coupled to the external computing device.

In some additional, alternative, or selectively cumulative embodiments, the second button is configured for controlling one or more functions of the external computing device that may translate the movement data into movement of a cursor on the display.

In some additional, alternative, or selectively cumulative embodiments, the extemal computing device is configured for translating activation of the second button into a selection command of a function associated with a location of the cursor.

In some additional, alternative, or selectively cumulative embodiments, the extemal computing device is located remotely and the display is located locally, such as in the same room as the intraoral scanner.

In yet another aspect of the present disclosure, an intraoral scanning system is described. The intraoral scanning system includes an intraoral scanner that obtains images of a dental object. The intraoral scanner includes a projector unit, a camera unit, and a button interface. The projector unit illuminates the dental object and the camera unit is coupled to the projector unit and acquires images of the dental object. The projector unit and the camera unit are arranged inside the scanner housing. The button interface is arranged on the scanner housing. The button interface includes a first button and a second button. The first button has a contact surface with a first tactile characteristic. The first button is activated when a first activation weight is applied on the contact surface of the first button. The second button has a contact surface with a second tactile characteristic. The second button is activated when a second activation weight is applied on the contact surface of the second button. The differing tactile characteristics and the differing activation weights allow a user of the intraoral scanner to distinguish the buttons from each other by way of their sense of touch.

In some additional, alternative, or selectively cumulative embodiments, the first activation weight is between 170 g and 270 g, preferably between 185 g and 255 g, more preferably between 200 g and 240 g.

In some additional, alternative, or selectively cumulative embodiments, the second activation weight is between 120 g and 220 g, preferably between 135 g and 205 g, more preferably between 150 g and 190 g.

In some additional, alternative, or selectively cumulative embodiments, the first activation weight is at least 10% heavier, preferably 20% heavier, more preferably 25% heavier, than the second activation weight.

In some additional, alternative, or selectively cumulative embodiments, the contact surface of the first button includes a first outer contour and the contact surface of the second button includes a second outer contour. The first outer contour is different from the second outer contour. This allows a user of the intraoral scanner to distinguish the buttons from each other by way of their sense of touch.

In some additional, alternative, or selectively cumulative embodiments, one of the first outer contour and the second outer contour is substantially convex and the other of the first outer contour and the second outer contour is substantially concave.

In some additional, alternative, or selectively cumulative embodiments, the first outer contour includes a depression arranged centrally on the contact surface of the first button and the second outer contour includes a protrusion arranged centrally on the contact surface of the second button. This allows a user of the intraoral scanner to distinguish the buttons from each other by way of their sense of touch.

In some additional, alternative, or selectively cumulative embodiments, the contact surface of the first button has a first outer area and the contact surface of the second button has a second outer area. The first outer area is different from the second outer area. This allows a user of the intraoral scanner to distinguish the buttons from each other by way of their sense of touch.

In some additional, altemative, or selectively cumulative embodiments, one of the first outer area and the second outer areas is between 20% and 60% larger, preferably between 30% and 50% larger, more preferably between 35% and 45% larger, than the other of the first outer area and the second outer area.

In some additional, alternative, or selectively cumulative embodiments, at least one of the contact surface of the first button and the contact surface of the second button is/are provided by a single flexible overlay. The single flexible overlay is made from an elastomer, such as silicone rubber. The flexible overlay allows the button interface to remain clean and hygienic.

In some additional, alternative, or selectively cumulative embodiments, the single flexible overlay is made in one piece and provides both of the contact surface of the first button and the contact surface of the second button. The single flexible overlay includes a separation zone between the contact surface of the first button and the contact surface of the second button and the separation zone has a width which is narrower than the width of the contact surfaces of the first button and the second button. This allows a user of the intraoral scanner to distinguish the buttons from each other by way of their sense of touch.

In some additional, alternative, or selectively cumulative embodiments, one or both of the first button and the second button is a touch button. The touch button(s), providing one or both of the first button and the second button, is/are provided by one or more touch sensitive area(s) of the outer surface of the scanner housing.

In some additional, alternative, or selectively cumulative embodiments, one of the first button and second button is provided by a push button and the other of the first button and the second button is provided by a touch button. This allows a user of the intraoral scanner to distinguish the buttons from each other by way of their sense of touch.

In some additional, alternative, or selectively cumulative embodiments, the intraoral scanning system further includes an external computing device and a display coupled to the external computing device. The second button controls one or more functions of the external computing device.

In some additional, alternative, or selectively cumulative embodiments, the intraoral scanner includes an inertial measurement unit (IMU) for detecting movement of the intraoral scanner and for generating movement data based on the detected movement. The external computing device translates the movement data into movement of a cursor generated on the display. The external computing device translates activation of the second button into a selection command of a function associated with a current location of the cursor.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
FIG. 1 is a view of a clinical dental setting, in accordance with an embodiment of the disclosure;
FIG. 2 is a block diagram of an intraoral scanning system applied in the clinical dental setting of FIG. 1, in accordance with an embodiment of the disclosure;
FIG. 3 is an intraoral scanner of the intraoral scanning system, in accordance with an embodiment of the disclosure;
FIG. 4 is a button interface of the intraoral scanner, in accordance with an embodiment of the disclosure;
FIG. 5 is an embodiment of the button interface of the intraoral scanner, in accordance with an embodiment of the disclosure;
FIG. 6 is a cross-sectional view of the button interface, in accordance with an embodiment of the disclosure;
FIG. 7 is an exploded view of a button interface of the intraoral scanner illustrating components and details of an underlying circuitry associated with the button interface, in accordance with an embodiment of the disclosure;
FIGS. 8A through 8F illustrate exemplary embodiments of the button interface of the intraoral scanner, in accordance with an embodiment of the disclosure; and
FIGS. 9A through 9H illustrate further exemplary embodiments of the button interface correspondingly installed on scanner housings of intraoral scanners, in accordance with an embodiment of the disclosure.

### DETAILED DESCRIPTION

Example embodiments are described below with reference to the accompanying drawings. Unless otherwise expressly stated in the drawings, the sizes, positions, etc., of components, features, elements, etc., as well as any distances therebetween, are not necessarily to scale, and may be disproportionate and/or exaggerated for clarity.

The terminology used herein is for the purpose of describing particular example embodiments only and is not intended to be limiting. As used herein, the singular forms "a," "an" and "the" are intended to include the plural forms as well, unless the context clearly indicates otherwise. It should be recognized that the terms "comprise," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise specified, a range of values, when recited, includes both the upper and lower limits of the range, as well as any sub-ranges therebetween. Unless indicated otherwise, terms such as "first," "second," etc., are only used to distinguish one element from another. For example, one element could be termed a "first element" and similarly, another element could be termed a "second element," or vice versa. The section headings used herein are for organizational purposes only and are not to be construed as limiting the subject matter described.

Unless indicated otherwise, the terms "about," "thereabout," "substantially," etc. mean that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art.

Spatially relative terms, such as "right," left," "below," "beneath," "lower," "above," and "upper," and the like, may be used herein for ease of description to describe one element's or feature's relationship to another element or feature, as illustrated in the drawings. It should be recognized that the spatially relative terms are intended to encompass different orientations in addition to the orientation depicted in the figures. For example, if an object in the figures is turned over, elements described as "below" or "beneath" other elements or features would then be oriented "above" the other elements or features. Thus, the term "below" can, for example, encompass both an orientation of above and below. An object may be otherwise oriented (e.g., rotated 90 degrees or at other orientations) and the spatially relative descriptors used herein may be interpreted accordingly.

Unless clearly indicated otherwise, all connections and all operative connections may be direct or indirect. Similarly, unless clearly indicated otherwise, all connections and all operative connections may be rigid or non-rigid.

Like numbers refer to like elements throughout. Thus, the same or similar numbers may be described with reference to other drawings even if they are neither mentioned nor described in the corresponding drawing. Also, even elements that are not denoted by reference numbers may be described with reference to other drawings.

Many different forms and embodiments are possible without deviating from the spirit and teachings of this disclosure and so this disclosure should not be construed as limited to the example embodiments set forth herein. Rather, these example embodiments are provided so that this disclosure will be thorough and complete, and will convey the scope of the disclosure to those skilled in the art.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments.

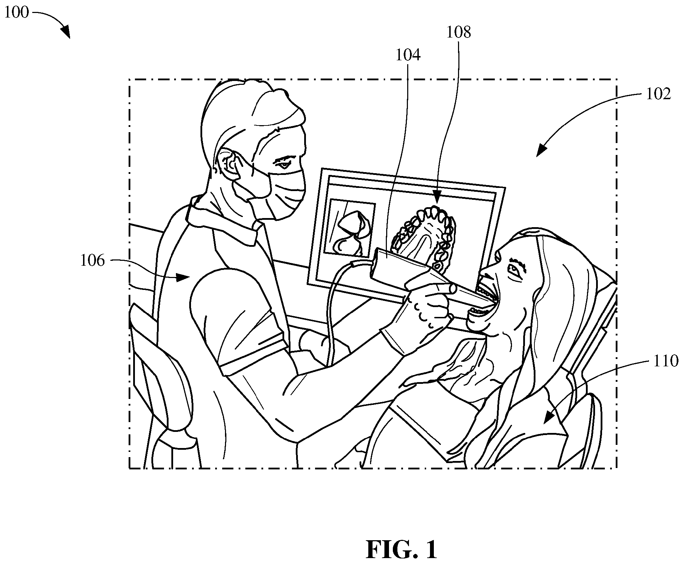

Referring to FIG. 1, a clinical dental setting (or simply, a setting 100) is described. The setting 100 includes various equipment. As an example, the setting 100 includes an intraoral scanning system 102 having an intraoral scanner 104. The setting 100 accommodates a user 106, such as a dentist, and a patient 110 to be inspected by the user 106. FIG. 1 depicts the user 106 performing an intraoral scan on the patient 110. Moreover, the setting 100 includes various devices that enables the user to perform operations, such as scanning and/or monitoring of an oral cavity of the patient 110, referred to as an intraoral scan. The intraoral scanning system 102 may also include an external computing device 108, and a display coupled to the external computing device 108. The display may include a touch screen display, although other displays now known or in the future developed may be applied. In some embodiments, the external computing device 108 may be located remotely to the setting 100 and the display may be located locally to the setting 100, such as in a same room as the intraoral scanner 104. The external computing device 108 may also include additional devices such as a mouse, a joystick, a keyboard, and the like.

The external computing device, e.g. a server, a laptop, or a desktop, may be configured for displaying, via the display, a Graphical User Interface (GUI), which during scanning may show a real-time preview of the 3D model of the scan data collected thus far in the scanning session and/or a real-time video feed of the intraoral scanner's current field of view. The GUI may also show one or more menu(s) or selection items for controlling processes related to the scanning and/or control of the external computing device. Such menu(s) or selection items may be activated by using the intraoral scanner as a pointer device, i.e. using the Inertial Measurement Unit to detect movement of the scanner whereby the user may move a virtual selection tool, such as a cursor, in the GUI to a desired menu option or selection item by moving the scanner and then select the desired menu option or selection item by pressing a button of the button interface, e.g. the second button, while hovering the virtual selection tool over the desired menu option or selection item. For such operations, it is desirable the button used for selecting the menu option or selection item, e.g. the second button, has a lighter activation weight so that the user does not inadvertently move the virtual selection tool when applying a force to the button to activate the button.

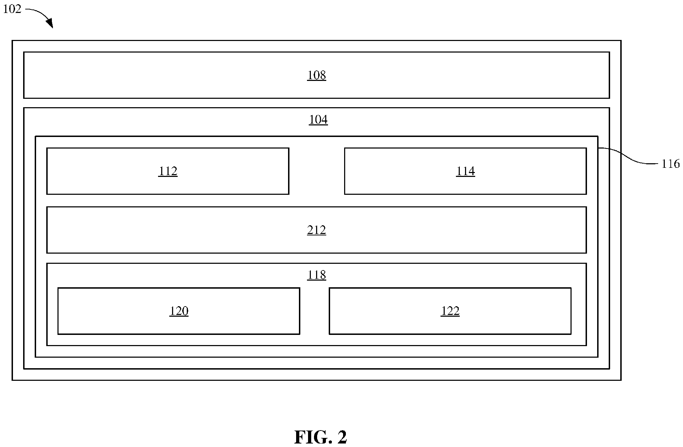

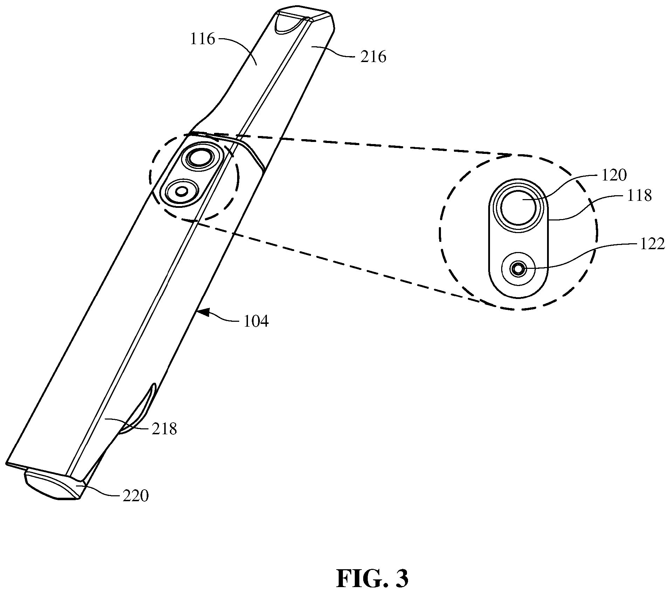

Referring to FIGS. 2 and 3, the intraoral scanner 104 may include a camera unit 114 which may be used to obtain images of a dental object of the patient 110 and/or capture a precise three-dimensional (3D) pictures or models of the patient's oral cavity. The dental object or the patient's oral cavity may include the patient's teeth, gums, and surrounding tissues. The models, as may be captured, can be utilized for a number of procedures, such as implant planning, orthodontics, prosthodontics, and restorative dentistry, for the patient 110. The intraoral scanner 104 may further include a projector unit 112, a camera unit 114, a scanner housing 116, and a button interface 118. The button interface 118 may include a first button 120 and a second button 122. The first button 120 may also be a power button and/or main button which is applied to activate (e.g., start scan or power-up) / deactivate (e.g., stop scan or power down) the intraoral scanner 104.

The intraoral scanner 104 may also include a scanning tip 216 and a body 218 extending away from the scanning tip 216. Further, the intraoral scanner 104 may include an inertial measurement unit (IMU) 212. The IMU 212 may be configured to detect a movement of the intraoral scanner 104 and may also generate movement data based on the detected movement. Both the intraoral scanner 104 and the external computing device 108 may include corresponding processors and transceivers that may allow communication between the intraoral scanner 104 and the external computing device 108. The intraoral scanner 104 may also include a battery 220 (see FIG. 3).

The projector unit 112 is configured for illuminating the dental object. The projector unit 112 may be configured to emit either structured light or laser patterns onto the oral cavity of the patient 110. The camera unit 114 may be coupled to the projector unit 112 and configured for acquiring or obtaining images of the illuminated dental object of the patient 110. Further, the projector unit 112 and the camera unit 114 may be arranged inside the scanner housing 116.

The button interface 118 may be arranged on the scanner housing 116, where the button interface 118 may include the first button 120 and the second button 122. As discussed above, the first button 120 may be an activation/power button, and, for example, may be used to activate and deactivate the intraoral scanner 104. Conversely, the second button 122 may be configured for controlling one or more functions of the external computing device 108, as an example, the second button 122 may be applied for interactions with and/or select commands on the display and/or the external computing device 108.

The first button 120 may have a first contact surface 420 with a first tactile characteristic, and the first button 120 may be activated when a first activation weight, e.g. by a push of a finger, is applied on the first contact surface 420 of the first button 120. The second button 122 may have a second contact surface 422 with a second tactile characteristic, and the second button 122 may be activated when a second activation weight is applied on the second contact surface 422 of the second button 122. The first tactile characteristic is different from the second tactile characteristic, and, further, the first activation weight is different from the second activation weight. As an example, the first activation weight may be greater than the second activation weight. The relatively higher activation weight applicable for the first button 120 keeps the first button 120 from inadvertent activation/deactivation, while the relatively lower activation weight applicable for the second button 122 lowers the pressure needed to use the second button 122, making it easier or less strenuous for the user 106 to use the second button once or repeatedly as required. As an example, a functionality associated with a single contact or click of the second button 122 may differ from a functionality associated with double contacts or clicks or multiple contact or clicks of the second button 122, and the relatively lower activation weight applicable for the second button 122 lowers the pressure needed for making such contacts or clicks. Moreover, the differing activation weights and the differing tactile characteristics allow a user of the intraoral scanner 104 to distinguish the buttons 120, 122 from each other by way of their sense of touch.

In some examples, the first activation weight may be between 170 grams (g) and 270 g, preferably between 185 g and 255 g, more preferably between 200 g and 240 g. The second activation weight may be between 120 g and 220 g, preferably between 135 g and 205 g, more preferably between 150 g and 190 g. In some embodiments, the first activation weight may be at least 10% heavier, preferably 20% heavier, more preferably 25% heavier, than the second activation weight. These values are provided for illustrative purposes alone and can include other values.

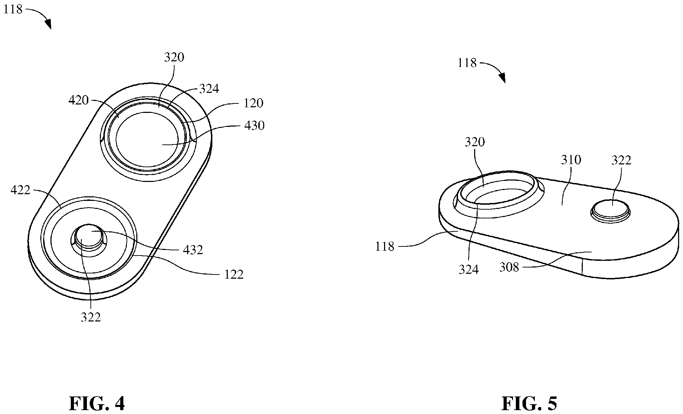

Referring to FIGS. 4 and 5, and, in some embodiments, one or both of the first button 120 and the second button 122 may be a touch button, e.g. a touch surface based on capacitive sensors and/or force sensors detecting a touch by the user. To this end, one or both of the first button 120 and the second button 122 may include one or more touch sensitive area(s), e.g., at an outer surface of the first button 120 and the second button 122 (and/or of the scanner housing 116). Further, in some embodiments, one or both of the first button 120 and the second button 122 includes a push button. Also, in some embodiments, one of the first button 120 and the second button 122 may include a push button and the other of the first button 120 and the second button 122 includes a touch button.

In some embodiments, a first contact surface 420 of the first button 120 has a first outer contour 320 and a second contact surface 422 of the second button 122 has a second outer contour 322. The first outer contour 320 may be different from the second outer contour 322. One of the first outer contour 320 and the second outer contour 322 is substantially convex and the other of the first outer contour 320 and second outer contour 322 is substantially concave. The term 'substantially' used here or elsewhere may account for manufacturing tolerances. As an example, the first outer contour 320 may be concave and the second outer contour 322 may be convex. The first outer contour 320 may include a depression 430 arranged centrally on the first contact surface 420 of the first button 120, and the second outer contour 322 may include a protrusion 432 arranged centrally on the second contact surface 422 of the second button 122. In addition, the first outer contour 320 may include a circumferential rim 324 around the depression 430. The circumferential rim 324 may define an elevated annular surface around the depression 430. These features allow a user of the intraoral scanner 104 to distinguish the buttons 120, 122 from each other by way of their sense of touch.

This difference in the contours, activation weights, and various other tactile characteristics of the buttons 120, 122, as have been discussed herein, allows the user to distinguish the buttons 120, 122 by sense of touch (e.g., finger touch), not necessitating the user 106 to shift their eye positions towards the buttons 120, 122, in turn enabling the user 106 to perform any activity (e.g., scanning or monitoring of the dental object or the oral cavity of the patient 110 on the display of the external computing device 108) without removing their gaze from that activity.

In some embodiments, the first contact surface 420 of the first button 120 has a first outer area and the second contact surface 422 of the second button 122 has a second outer area. The first outer area is different from the second outer area. This allows a user of the intraoral scanner 104 to distinguish the buttons 120, 122 from each other by way of their sense of touch. One of the first outer area and the second outer areas may be between 20% and 60% larger, preferably between 30% and 50% larger, more preferably between 35% and 45% larger, than the other of the first outer area and the second outer area. As an example, the first outer area is larger than the second outer area. The first outer area may be between 200 and 300 (millimeter) mm², preferably between 220 and 280 mm², more preferably between 240 and 260 mm². The second outer area may be between 125 and 225 mm², preferably between 145 and 205 mm², more preferably between 165 and 185 mm². These values are provided for illustrative purposes alone and can include other values.

Further, in some embodiments, the first contact surface 420 of the first button 120 has a first shape and the second contact surface 422 of the second button 122 has a second shape. The first shape may be different from the second shape. This allows the buttons 120, 122 to be distinguishable from each other by way of sense of touch. One or both of the first shape and the second shape is/are substantially circular. In some embodiments, the sizes of the buttons 120, 122 may also differ to make the buttons 120, 122 distinguishable from each other by way of sense of touch. In one example, the first outer shape has a radius between 5 mm and 13 mm, preferably between 6 mm and 12 mm, more preferably between 7 mm and 11 mm. The second outer shape has a radius between 5.5 mm and 11.5 mm, preferably between 6.5 mm and 10.5 mm, more preferably between 5.5 mm and 9.5 mm. These values are provided for illustrative purposes alone and can include other values.

It is noted that throughout this text, the term shape is used to refer to the shape when viewed along the activation direction of a button, i.e. the direction force must be applied to a button in order to activate it, while the term contour is used when viewed perpendicular to the activation direction of a button. In other words, the shape is used when a button is seen from above and the contour is used when a button is seen from the side.

In some examples, one of the first and second activation areas may be between 2 and 10 times larger, preferably between 4 and 8 times larger, more preferably between 5 and 7 times larger, than the other of the first and second activation areas. As an example, the first activation area is different from the second activation area, e.g., the first activation area is larger than the second activation area. These values are provided for illustrative purposes alone and can include other values.

In some embodiments, the at least one of the first contact surface 420 of the first button 120 and the second contact surface 422 of the second button 122 is/are provided by a single flexible overlay 308 (see FIG. 5). The single flexible overlay 308 may be made from an elastomer, such as silicone rubber. Further, the single flexible overlay 308 may be made in one integral piece for both of the first contact surface 420 of the first button 120 and the second contact surface 422 of the second button 122. In other words, both of the first contact surface 420 of the first button 120 and the second contact surface 422 of the second button 122 may be provided or defined by the single flexible overlay 308. In some embodiments, the single flexible overlay 308 may be a thin layer, e.g. of rubber or silicone, covering the electronics of the buttons 120, 122 and protects internal components of the intraoral scanner 104 from dust and water. The flexible overlay 308 allows the button interface 118 to remain clean and hygienic, e.g., by preventing leakage of any material into the scanner housing 116.

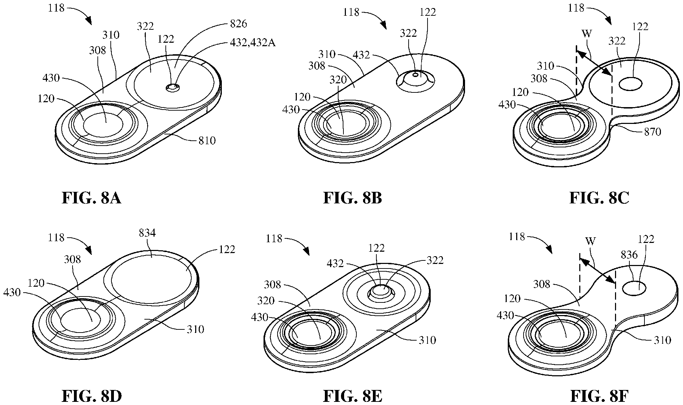

The single flexible overlay 308 may include a separation zone 310 between the first contact surface 420 of the first button 120 and the second contact surface 422 of the second button 122. The separation zone 310 may include a width, *W*, (see FIGS. 8C and 8F) which is narrower than the width of the contact surfaces 420, 422 of the first button 120 and the second button 122 (e.g., see button interface 118 in FIGS. 8C and 8F). In some embodiments, the single flexible overlay 308 may be arranged in one or more depression(s) on the outer surface of the scanner housing 116 so that the outer surface of the flexible overlay 308 is substantially flush with an outer surface of the scanner housing 116. The separation zone 310 may indicate a differentiation between the first button 120 and the second button 122 by providing an area between the two that are tactile and visibly distinguishable from the contact areas of the first and second buttons.

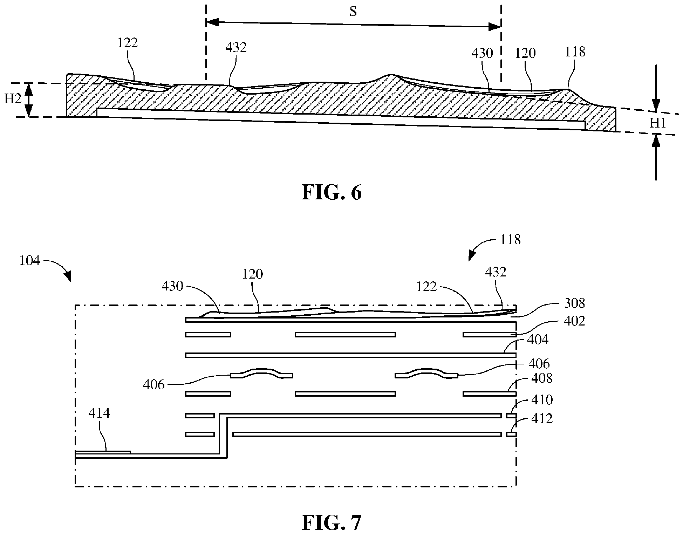

Referring to FIG. 6, in some embodiments, a center of the first button 120 has a first height, *H1*, above or below an outer surface of the scanner housing 116 and the center of the second button 122 has a second height, *H2*, above or below the outer surface of the scanner housing 116. The first height, *H1*, may be different from the second height, *H2*, to make the buttons 120, 122 distinguishable from each other by way of sense of touch. As an example, the first height, *H1,* may be lower than the second height, *H2*.

Further, in some embodiments, the first contact surface 420 of the first button 120 has a first surface roughness and the second contact surface 422 of the second button 122 has a second surface roughness. The first surface roughness may be different from the second surface roughness to make the buttons 120, 122 distinguishable from each other by way of sense of touch. The center of the first button 120 and the center of the second button 122 may be spaced apart (see distance, S) by a value anywhere between 12 mm and 24 mm, preferably between 14 mm and 22 mm, more preferably between 16 mm and 20 mm, from each other.

In some embodiments, the first contact surface 420 of the first button 120 has a first type of visual marker and the second contact surface 422 of the second button 122 has a second type of visual marker. The first type of visual marker may be different from the second type of visual marker. One of the first and second visual markers may be arranged centrally on its respective contact surface and the other of the first and second visual markers is arranged around the periphery of its respective contact surface. Visual markers may include any visually viewable features, such as but not limited to, imagery, indicia, iconography, embossing, engraving, words, letters, color marks, and the like.

Referring to FIG. 7, an exploded view of the button interface 118 of the intraoral scanner 104 is shown. As discussed above, the intraoral scanner 104 includes the scanner housing 116 incorporating the button interface 118 including the first button 120 and the second button 122, the depression 430, the protrusion 432 in the first button 120 and the second button 122, respectively, along with the single flexible overlay 308. In addition, the intraoral scanner 104 may also include an adhesive material 402, a dome retainer 404, metal domes 406, a spacer 408, a circuitry 410, an adhesive 412, and a stiffener 414.

The adhesive material 402 may be configured to bond the single flexible overlay 308 to the body of the intraoral scanner 104. Further, the adhesive material 402 may be resistant to heat moisture, and exposure to chemical agents, if any. The dome retainer 404 may be configured to hold the single flexible overlay 308 in position, and prevents misalignment or unintended displacement of the first contact surface 420 of the first button 120 and the second contact surface 422 of the second button 122. The metal dome 406 is a convex-shaped metal piece configured to provide tactile feedback based on a responsive touch experience. The metal dome 406 under the first button 120 may, at least partly, define the first activation weight, i.e. the first activation weight may correspond to the weight required to depress the metal dome 406 under the first button 120. The metal dome 406 under the second button 122 may, at least partly, define the second activation weight, i.e. the second activation weight may correspond to the weight required to depress the metal dome 406 under the second button 122. The metal dome 406 under the first button 120 may require a greater weight applied on it to depress it than the metal dome 406 under the second button 122.

Further, the metal dome 406 may be configured to create an electrical connection to trigger a command. The spacer 408 may be a thin insulating layer between the metal dome 406 and the underlying circuitry 410. The circuitry 410 may be configured to detect touch and convert into signals by integrating with scanner's main processing unit. The adhesive 412 may be used for bonding sensitive electronic components and ensures electrical conductivity in a region where insulation persist. The stiffener 414 may be a rigid support that reinforces the flexible components. The stiffener 414 may be manufactured using fiberglass and/or rigid plastic materials. Variations in this structure and arrangement may be contemplated by someone skilled in the art, without departure from the claimed subject matter. The components of the intraoral scanner 104, as described in connection with FIG. 7, are exemplary, and, in some embodiments, one or more such components described above may be omitted. In some cases, additional components may be included within the intraoral scanner 104, those components being now known or in the future developed.

FIGS. 8A-8F illustrates multiple embodiments of the button interface 118, in accordance with some embodiments of the disclosure. For ease, similar reference numerals have been used to refer to same or like parts.

FIG. 8A depicts the button interface 118 which may include a button layout with inverted dome and may include the first button 120 and the second button 122, and the single flexible overlay 308 may include a straight structure 810 on either side portion of the separation zone 310 of the button interface 118. The first outer contour 320 may include a depression 430 arranged centrally on the first contact surface 420 of the first button 120. The second outer contour 322 may include an inverted dome 826 centrally on the second contact surface 422 of the second button 122. The protrusion 432 of the second button 122 may be in the form of a dimple 432A. Although not limited to any structure or form, the dimple 432A can correspond to a dome-shaped lump which is structurally raised relative to an outer surface portion defined by the second outer contour 322. In some embodiments, a recessed area may surround the protrusion 432 or the dimple 432A.

FIG. 8B depicts the button interface 118 which may include a button layout having the first button 120 and the second button 122, and the single flexible overlay 308 may include a straight structure (similar to the straight structure 810) on either side portion of the separation zone 310 of the button interface 118. The first outer contour 320 may include a depression 430 arranged centrally on the first contact surface 420 of the first button 120. The second outer contour 322 may include a protrusion 432 portion centrally on the second contact surface 422 of the second button 122. The second outer contour 322 may be substantially convex and the first outer contour 320 may be substantially concave.

FIG. 8C depicts the button interface 118 which may include a flat button layout having the first button 120 and the second button 122, and the single flexible overlay 308 may include a curved structure 870 on either side portion of the separation zone 310 of the button interface 118. The first outer contour 320 may include a depression 430 arranged centrally on the first contact surface 420 of the first button 120. The second outer contour 322 may include a flat portion centrally on the second contact surface 422 of the second button 122.

FIG. 8D depicts the button interface 118 which may include a button layout with an inverted dome which may include the first button 120 and the second button 122, and the single flexible overlay 308 may include a straight structure (similar to the straight structure 810) on either side portion of the separation zone 310 of the button interface 118. The first outer contour 320 may include a depression 430 arranged centrally on the first contact surface 420 of the first button 120. The second outer contour 322 may include an inverted dome 834 (similar to the inverted dome 826) centrally on the second contact surface 422 of the second button 122.

FIG. 8E depicts the button interface 118 which may include a button layout which may include the first button 120 and the second button 122, and the single flexible overlay 308 may include a straight structure (similar to the straight structure 810) on either side portion of the separation zone 310 of the button interface 118. The first outer contour 320 may include a depression 430 arranged centrally on the first contact surface 420 of the first button 120. The second outer contour 322 may include a protrusion 432 portion centrally on the second contact surface 422 of the second button 122. The second outer contour 322 may be substantially convex and the first outer contour 320 may be substantially concave. In some embodiments, a recessed area may surround the protrusion 432.

FIG. 8F depicts the button interface 118 which may include a flat button layout including the first button 120 and the second button 122, and the single flexible overlay 308 may include a curved structure (similar to curved structure 870) on either side portion of the separation zone 310 of the button interface 118. The first outer contour 320 may include a depression 430 arranged centrally on the first contact surface 420 of the first button 120. The second outer contour 322 may include a flat portion 836 located or arranged centrally on the second contact surface 422 of the second button 122.

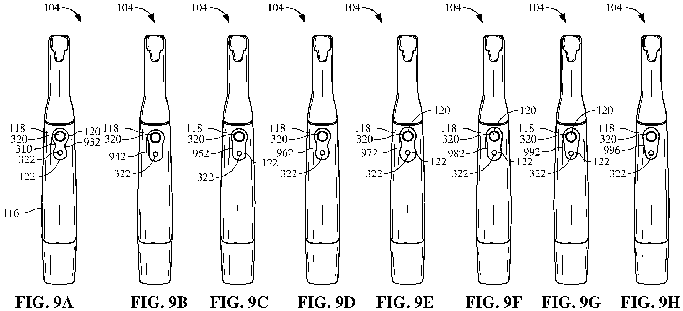

FIGS. 9A through 9H FIG. various examples of the intraoral scanner 104 installed with different variations and embodiments of the button interface 118, as have also been described in FIGS. 8A through 8G. Those skilled in the art may contemplate and apply a variety of other such examples based on the present disclosure, but without departure from the claimed subject matter. For ease, similar reference numerals have been used to refer to same or like parts.

FIG. 9A depicts the intraoral scanner 104 may include the button interface 118 which may include a flat button layout which may include the first button 120 and the second button 122, and the single flexible overlay 308 may include a curved structure 932 (similar to the curved structure 870) on either side portion of the separation zone 310 of the button interface 118. The first outer contour 320 may include a depression 430 arranged centrally on the first contact surface 420 of the first button 120. The second outer contour 322 may include a flat portion centrally on the second contact surface 422 of the second button 122. One of the first outer contour 320 and the second outer contour 322 may be substantially convex and the other of the first outer contour 320 and the second outer contour 322 may be substantially concave.

FIG. 9B depicts the intraoral scanner 104 may include the button interface 118 which may include a flat button layout which may include the first button 120 and the second button 122, and the single flexible overlay 308 may include a slightly curved structure on either side portion of the separation zone 310 of the button interface 118. Further, the single flexible overlay 308 may include an elongated portion 942 at the second button 122. The first outer contour 320 may include a depression 430 arranged centrally on the first contact surface 420 of the first button 120. The second outer contour 322 may include a flat portion centrally on the second contact surface 422 of the second button 122. One of the first outer contour 320 and the second outer contour 322 may be substantially convex and the other of the first outer contour 320 and the second outer contour 322 may be substantially concave.

FIG. 9C depicts the intraoral scanner 104 may include the button interface 118 which may include a flat button layout which may include the first button 120 and the second button 122, and the single flexible overlay 308 may include a slightly curved structure on either side portion of the separation zone 310 of the button interface 118. Further, the single flexible overlay 308 includes a slightly narrowed portion 952 near the second button 122. The first outer contour 320 may include a depression 430 arranged centrally on the first contact surface 420 of the first button 120. The second outer contour 322 may include a flat portion centrally on the second contact surface 422 of the second button 122. One of the first outer contour 320 and the second outer contour 322 may be substantially convex and the other of the first outer contour 320 and the second outer contour 322 may be substantially concave.

FIG. 9D depicts the intraoral scanner 104 may include the button interface 118 which may include a flat button layout which may include the first button 120 and the second button 122, and the single flexible overlay 308 may include a slightly curved structure 962 on either side portion of the separation zone 310 of the button interface 118 and the area of the first button 120 may be larger than the area of the second button 122. The first outer contour 320 may include a depression 430 arranged centrally on the first contact surface 420 of the first button 120. The second outer contour 322 may include a flat portion centrally on the second contact surface 422 of the second button 122. One of the first outer contour 320 and the second outer contour 322 may be substantially convex and the other of the first outer contour 320 and the second outer contour 322 may be substantially concave.

FIG. 9E depicts the intraoral scanner 104 may include the button interface 118 which may include a flat button layout which may include the first button 120 and the second button 122, and the single flexible overlay 308 may include a slightly curved structure 972 on either side portion of the separation zone 310 of the button interface 118 and the area of the first button 120 may equal to the area of the second button 122. The first outer contour 320 may include a depression 430 arranged centrally on the first contact surface 420 of the first button 120. The second outer contour 322 may include a flat portion centrally on the second contact surface 422 of the second button 122. One of the first outer contour 320 and the second outer contour 322 may be substantially convex and the other of the first outer contour 320 and the second outer contour 322 may be substantially concave.

FIG. 9F depicts the intraoral scanner 104 may include the button interface 118 which may include a flat button layout which may include the first button 120 and the second button 122, and the single flexible overlay 308 may include a slightly curved structure 982 on either side portion of the separation zone 310 of the button interface 118 and the area of the first button 120 may be wider than the area of the second button 122. The first outer contour 320 may include a depression 430 arranged centrally on the first contact surface 420 of the first button 120. The second outer contour 322 may include a flat portion centrally on the second contact surface 422 of the second button 122. One of the first outer contour 320 and the second outer contour 322 may be substantially convex and the other of the first outer contour 320 and the second outer contour 322 may be substantially concave.

FIG. 9G depicts the intraoral scanner 104 may include the button interface 118 which may include a flat button layout which may include the first button 120 and the second button 122, and the single flexible overlay 308 may include a straight structure 992 on either side portion of the separation zone 310 of the button interface 118 and a width of the first button 120 may be larger than the width of the second button 122. The first outer contour 320 may include a depression 430 arranged centrally on the first contact surface 420 of the first button 120. The second outer contour 322 may include a flat portion centrally on the second contact surface 422 of the second button 122. One of the first outer contour 320 and the second outer contour 322 may be substantially convex and the other of the first outer contour 320 and the second outer contour 322 may be substantially concave.

FIG. 9H depicts the intraoral scanner 104 may include the button interface 118 which may include a flat button layout which may include the first button 120 and the second button 122, and the single flexible overlay 308 may include a straight structure 996 on either side portion of the separation zone 310 of the button interface 118. The first outer contour 320 may include a depression 430 arranged centrally on the first contact surface 420 of the first button 120. The second outer contour 322 may include a flat portion centrally on the second contact surface 422 of the second button 122. One of the first outer contour 320 and the second outer contour 322 may be substantially convex and the other of the first outer contour 320 and the second outer contour 322 may be substantially concave.

During operation, the user 106 may perform an oral scan of the patient 110 by inserting the scanning tip 216 of the intraoral scanner 104 into the oral cavity of the patient 110. The scanning procedure may be started by an activation of the first button 120, e.g., by applying the first activation weight on the first contact surface 420 of the first button 120. Other functionalities associated with the procedure, e.g., feeding instructions into the external computing device 108, may be started by the user 106 by an activation of the second button 122, e.g., by applying the second activation weight on the second contact surface 422 of the second button 122. In other words, when the user 106 applies the first activation weight on the first button 120, the scanning procedure may be initiated, and, when the user 106 applies the second activation weight on the second button 122, the pointer is enabled. The pointer may enable the scanning tip 216 to navigate to several areas of the oral cavity, e.g., at different angles, to capture the dental object.

According to one exemplary scanning procedure, the user 106 may navigate the intraoral scanner 104 in the oral cavity of the patient 110 to capture Three-Dimensional (3D) images of the intraoral scanner 104. As a result, the intraoral soft and hard tissue's 3D geometry may be replicated by the intraoral scanner 104. A 3D scan of the patient's teeth or the oral cavity may be generated on the display of the external computing device 108. The user 106 may adjust, refine, or rescan areas of the patient's oral cavity based on a requirement. Subsequently, the user 106 may press the second button 122 (also known as pointer button) to initiate a pointer movement of a cursor corresponding to the oral cavity. The IMU 212 may detect movement of the intraoral scanner 104 and may generate movement data based on the detected movement. Further, the external computing device 108 may be configured to translate the movement data into movement of the cursor on the display of the extemal computing device 108. Also, in some cases, the external computing device 108 may be configured for translating activation of the second button 122 into a selection command of a function associated with a current or a real-time location of the cursor. Once the analysis is complete, the scanning procedure may be terminated by the user 106 by an application (e.g., a re-application) on the first activation weight on the first button 120 to terminate the scanning process.

As noted above, the relatively higher activation weight applicable for the first button 120 keeps the first button 120 from inadvertent activation, while the relatively lower activation weight applicable for the second button 122 lowers the pressure needed to activate the second button 122, making it easier or less strenuous for the user 106 to use/activate the second button repeatedly if it were required - as an example a functionality associated with a single contact or click of the second button 122 may differ from a functionality associated with double contacts or clicks or multiple contact or clicks of the second button 122, thus enhancing a versatility of the second button 122. Such functionality may also correspond to one or more selection commands of correspondingly one or more functions associated with a location of the cursor.

The different characteristics compounded with the different contours of the first outer contour 320 and the second outer contour 322 and various other differing characteristics of the buttons 120, 122 allows the user to comprehend the buttons 120, 122 by sense of touch (e.g., finger touching the buttons 120, 122), not necessitating the user 106 to shift their eye positions towards the buttons 120, 122, in turn enabling the user 106 to perform any activity (e.g., scanning or monitoring of the dental object or the oral cavity of the patient 110 on the display of the external computing device 108) without breaking eye contact with that activity.

It should be understood that the foregoing description is only illustrative of the aspects of the disclosed embodiments. Various alternatives and modifications can be devised by those skilled in the art without departing from the aspects of the disclosed embodiments.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It is to be noted that the word "comprising" does not necessarily exclude the presence of other elements or steps than those listed. It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

Although embodiments and features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

## Claims

1. An intraoral scanning system (102) comprising:
an intraoral scanner (104) configured for obtaining images of a dental object, wherein the intraoral scanner (104) comprises:
a projector unit (112) configured for illuminating the dental object,
a camera unit (114) coupled to the projector unit (112), and configured for acquiring images of the dental object,
a scanner housing (116), wherein the projector unit (112) and the camera unit (114) are arranged inside the scanner housing (116), and
a button interface (118) arranged on the scanner housing (112), wherein the button interface (118) comprises:
a first button (120) having a contact surface with a first tactile characteristic, wherein the first button (120) is configured for being activated when a first activation weight is applied on the contact surface of the first button (120), and
a second button (122) having a contact surface with a second tactile characteristic, wherein the second button (122) is configured for being activated when a second activation weight is applied on the contact surface of the second button (122),
wherein the first tactile characteristic is different from the second tactile characteristic, and/or wherein the first activation weight is different than the second activation weight.

2. The intraoral scanning system (102) of claim 1, wherein the contact surface of the first button (120) has a first outer contour, wherein the contact surface of the second button (122) has a second outer contour, and wherein the first outer contour is different from the second outer contour.

3. The intraoral scanning system (102) of claim 2, wherein one of the first outer contour and the second outer contour is substantially convex and the other of the first outer contour and the second outer contour is substantially concave.

4. The intraoral scanning system (102) of claims 2 or 3, wherein the first outer contour comprises a depression (430) arranged centrally on the contact surface of the first button (120), and wherein the second outer contour comprises a protrusion (432) arranged centrally on the contact surface of the second button (122).

5. The intraoral scanning system (102) of any of the previous claims, wherein the contact surface of the first button (120) has a first outer area, wherein the contact surface of the second button (122) has a second outer area, and wherein the first outer area is different from the second outer area.

6. The intraoral scanning system (102) of claim 5, wherein one of the first outer area and the second outer areas is between 20% and 60% larger, preferably between 30% and 50% larger, more preferably between 35% and 45% larger, than the other of the first outer area and the second outer area.

7. The intraoral scanning system (102) of any of the previous claims, wherein the first activation weight is between 170 grams (g) and 270 g, preferably between 185 g and 255 g, more preferably between 200 g and 240 g.

8. The intraoral scanning system (102) of any of the previous claims, wherein the second activation weight is between 120 g and 220 g, preferably between 135 g and 205 g, more preferably between 150 g and 190 g.

9. The intraoral scanning system (102) of any of the previous claims, wherein the first activation weight is at least 10% heavier, preferably 20% heavier, more preferably 25% heavier, than the second activation weight.

10. The intraoral scanning system (102) of any of the previous items, wherein at least one of the contact surface of the first button (120) and the contact surface of the second button (122) is/are provided by a single flexible overlay (308), wherein the single flexible overlay (308) is made from an elastomer, such as silicone rubber.

11. The intraoral scanning system (102) of claim 10, wherein the single flexible overlay (308) is made in one piece and provides both of the contact surface of the first button (120) and the contact surface of the second button (120), wherein the single flexible overlay (308) comprises a separation zone (310) between the contact surface of the first button (120) and the contact surface of the second button (120), and wherein the separation zone (310) has a width which is narrower than the width of the contact surfaces of the first button (120) and the second button (120).

12. The intraoral scanning system (102) of any of the previous claims, wherein one or both of the first button (120) and the second button (122) is a touch button, wherein the touch button(s) providing one or both of the first button (120) and the second button (122) is/are provided by one or more touch sensitive area(s) of the outer surface of the scanner housing (116).

13. The intraoral scanning system (102) of claim 12, wherein one of the first button (120) and second button (122) is provided by a push button and the other of the first button (120) and the second button (122) is provided by a touch button.

14. The intraoral scanning system (102) of any of the previous claims, wherein the intraoral scanning system (102) further comprises:
an external computing device (108); and
a display coupled to the external computing device (108),
wherein the second button (122) is configured for controlling one or more functions of the external computing device (108).

15. The intraoral scanning system (102) of claim 14, wherein the intraoral scanner (104) further comprises:
an inertial measurement unit (IMU) (212) configured for detecting movement of the intraoral scanner (104) and for generating movement data based on the detected movement,
wherein the external computing device (108) is configured for translating the movement data into movement of a cursor generated on the display, and wherein the external computing device (108) is configured for translating activation of the second button (120) into a selection command of a function associated with a current location of the cursor.
